Europäisches Patentamt

(19) European Patent Office

Office européen des brevets

(11) Veröffentlichungsnummer: **0 174 699**
**B1**

(12) **EUROPÄISCHE PATENTSCHRIFT**

(45) Veröffentlichungstag der Patentschrift:
23.11.88

(51) Int. Cl.⁴: **C 03 B 37/023,** C 03 B 37/027

(21) Anmeldenummer: **85201425.7**

(22) Anmeldetag: **10.09.85**

(54) Verfahren und Vorrichtung zum Herstellen einer optischen Faser mit einer Kunststoffumhüllung.

(30) Priorität: **13.09.84 NL 8402799**

(43) Veröffentlichungstag der Anmeldung:
**19.03.86 Patentblatt 86/12**

(45) Bekanntmachung des Hinweises auf die Patenterteilung:
**23.11.88 Patentblatt 88/47**

(84) Benannte Vertragsstaaten:
**AT BE CH DE FR GB IT LI NL SE**

(56) Entgegenhaltungen:
**EP-A-0 079 186**
**EP-A-0 105 563**

(73) Patentinhaber: **N.V. Philips' Gloeilampenfabrieken,**
**Groenewoudseweg 1, NL- 5621 BA Eindhoven (NL)**

(72) Erfinder: **Jochem, Cornelis Marinus Gerrit, p/a**
**INT. OCTROOIBUREAU B.V. Prof. Holstlaan 6,**
**NL- 5656 AA Eindhoven (NL)**
Erfinder: **van der Ligt, Jacobus Wilhelmus C., p/a**
**INT. OCTROOIBUREAU B.V. Prof. Holstlaan 6,**
**NL- 5656 AA Eindhoven (NL)**

(74) Vertreter: **Auwerda, Cornelis Petrus,**
**INTERNATIONAAL OCTROOIBUREAU B.V. Prof.**
**Holstlaan 6, NL- 5656 AA Eindhoven (NL)**

**Beschreibung**

Die Erfindung bezieht sich auf ein Verfahren zum Herstellen einer optischen Faser mit einer Umhüllung aus einem Kunststoff, wobei die Faser aus dem auf die Ziehtemperatur erhitzten Ende einer Vorform gezogen und danach gekühlt wird, wobei sie in Längsrichtung durch eine gasgefüllte Kühlvorrichtung worin die Faser mit dem Gas in kontakt kommt und nach der Kühlung durch eine Kunststoffanbringungsvorrichtung hindurchgeführt wird.

Die Erfindung bezieht sich ebenfalls auf eine Vorrichtung zum Durchführen des erfindungsgemässen Verfahrens.

Eine Vorrichtung zum Durchführen eines Verfahrens der obengenannten Art ist beispielsweise aus der veröffentlichten internationalen Patentanmeldung (PCT) WO-A1-83/02 268 bekannt. Die darin beschriebene Vorrichtung besteht im wesentlichen aus einem porösen Rohr, durch das die Faser hindurchgeführt wird, wobei durch die poröse Wand des Rohres allseitig Stickstoff in den durch das Rohr eingeschlossenen Raum eingeführt wird. Mittels des strömenden Gases wird Wärme abgeführt. Dabei wird ausschliesslich die Wärmeaufnahmeleistung des verwendeten Gases, in diesem Fall Stickstoff, verwendet. Weil dazu relativ grosse Gasmengen notwendig sind, müssen Massnahmen getroffen werden, um zu vermeiden, dass die Faser unter dem Einfluss des Gasstromes ins Schwingen gerät. Dazu wird das poröse Rohr verwendet.

Eine Vorrichtung zum Durchführen eines Verfahrens der genannten Art ist ebenfalls aus der europäischen Patentanmeldung EP-A1-0 079 186 bekannt. Bei dieser Vorrichtung erfolgt die Kühlung der Faser ausschliesslich oder im wesentlichen durch gekühltes Helium, das an der Faser entlang geführt wird. Die Kühlung der Faser soll höhere Faserziehgeschwindigkeiten ermöglichen als es bei einer natürlichen Kühlung in der Praxis möglich ist. Wenn die Faser nach dem Ziehen aus der Vorform nicht gekühlt wird und der Abstand zwischen der Vorform und der Kunststoffanbringungsvorrichtung nicht lang genug ist, besteht die Gefahr, dass die Faser bei hoher Ziehgeschwindigkeit nicht genügend Zeit erhält, auf natürliche Weise (Strahlung usw.) auf eine Temperatur abzukühlen, die beim Anbringen der Kunststoffumhüllung zulässig ist. Wenn die Temperatur der Faser bai der Berührung mit dem Kunststoffumhüllungsmaterial in der Anbringungsvorrichtung zu hoch ist, wird die Faser von dem Kunststoff ungenügend benetzt, und es kann eine thermische Zersetzung das Kunststoffes auftreten. Dies führt zu einer mangelhaften Qualität der Kunststoffumhüllung.

Die Vorrichtung nach der auropäischen Patentanmeldung EP-A1-0 079 186 weist ein Rohr auf, in das die Faser unmittelbar nach dem Ziehen eingeführt wird, Gekühltes trocknes Helium wird derart in das Rohr eingeführt, das die Strömungsrichtung eine radial auf die Faser gerichtete Komponente und eine Komponente entgegen der Bewegungsrichtung der Faser aufweist. Das Rohr ist mit einer Wärmeisolierumhüllung versehen, um möglichst zu vermeiden, dass das gekühlte Helium aus der Umgebung Wärme aufnimmt, wodurch die Kühlleistung verringert würde. Nach einer besonderen Ausführungsform (siehe auch die U.S. Patentschrift US-A-4 437 870) wird das Helium über nahezu die ganze Rohrlänge über ein poröse Rohr, das die Faser umgibt, allseitig zugeführt. Bei dieser Vorrichtung ist das poröse Rohr innerhalb eines doppelwandigen Rohres angeordnet, dessen Innendurchmesser grösser ist als der Aussendurchmesser des porösen Rohres. In den Raum zwischen dem porösen Rohr und der Innenwand des doppelwandigen Rohres wird gekühltes Helium eingeblasen. Das eingeblasene Helium diffundiert durch das poröse Rohr in den Raum innerhalb des porösen Rohres, durch das die Faser hindurchgeführt wird. Dadurch, dass das Helium allseitig in Richtung der Faser strömt, gibt es keine Gefahr, dass diese ins Schwingen gerät. In dem Raum zwischen den Wänden des doppelwandigen Rohres befindet sich flüssiger Stickstoff, um zu vermeiden, dass das gekühlte Helium Wärme aus der umgebenden Atmosphäre aufnimmt. Der flüssige Stickstoff dient dabei ausschliesslich als Wärmeisolierung. Bei der gegebenen Anordnung wird keine Wärmeenergie, die von der heissen Faser herrührt, in den flüssigen Stickstoff übertragen. Es wird ausschliesslich die Wärmeaufnahmeleistung (Wärmekapazität) des gekühlten Heliums benutzt. Die von der Faser abgegebene Wärmeenergie wird mit dem Helium aus der Vorrichtung abgeführt. Bei einer Ziehgeschwindigkeit von 5 m/s wird zum Erreichen einer ausreichend niedrigen Temperatur eine Strömungsgeschwindigkeit des Heliums durch eine Vorrichtung mit einem Rohrinnendurchmesser von 12,7 mm nach der genannten Patentanmeldung von 39,9 Liter je Minute angegeben. Bei diesen hohen Gasgeschwindigkeiten dürfte es einleuchten, dass Massnahmen getroffen werden müssen, um zu vermeiden, dass die Faser in der Kühlvorrichtung ins Schwingen gerät, wodurch Gefahr eines Bruchs und einer nicht-symmetrischen Kunststoffumhüllung zunimmt. Aus den in der Vorrichtung nach EP-A1-0 079 186 erforderlichen hohen Gasgeschwindigkeiten lässt sich ableiten, dass von einer Wärmeübertragung über das Gas zu der Wand der Vorrichting und über die Wand zu der Umgebung nicht die Rede ist. Der Oberbegriff des Anspruchs 13 ist aus der EP-A1-0 079 186 bekannt.

Die Erfindung hat nun zur Aufgabe, ein Verfahren und eine Vorrichtung zum Durchführen des Verfahrens, wie eingangs erwähnt, zu schaffen, wobei der Gasgebrauch und damit die Gefahr von Schwingung der Faser verringert ist.

Diese Aufgabe wird gelöst mit einem Verfahren, bei dem die Faser im wesentlichen durch Wärmeabgabe an eine stark gekühlte Wand gekühlt wird, wobei das Gas als Wärmetransportmedium wirksam ist. Bei dem erfindungsgemässen Verfahren wird die von der Faser aufgenommene Wärme im wesentlichen über die gekühlte Wand zu dem Kühlmittel abgeführt, mit dem diese Wand gekühlt wird, vorzugsweise wird wegen der grossen Wärmetransportleistung hier zu ein flüssiges Kühlmittel verwendet. Bei dem erfindungsgemässen Verfahren kann der Gasstrom relativ gering sein. Der Gasstrom muss jedoch mindestens ausreichen, um das Eindringen der umgebenden Atmosphäre durch Öffnungen in der Vorrichtung, durch welche die Faser in die

2

Vorrichtung eintritt und diese verlässt, zu verhindern und Gasverlust durch diese Öffnungen auszugleichen. Vorzugsweise wird das Gas gegenüber der Bewegungsrichtung der Faser im Gegenstrom durch die Vorrichtung hindurchgeführt. In dem erfindungsgemässen Värfahren wird auf vorteilhafte Weise als Wärmetransportgas Helium und/oder Wasserstoff verwendet, weil die Wärmetransporteigenschaften im Vergleich zu anderen Gasen besonders gut sind. Bevorzugt wird dabei Helium wegen der Sicherheit. Heliumwasserstoffgemische mit einer Wasserstoffmenge, die bei Kontakt mit der umgebenden Atmosphäre nicht zu der Bildung explosiver bzw. brennbarer Gasgemische führen, wären ebenfalls verwendbar. Bei einer Ziehgeschwindigkeit von 6 m/s kann bei einer Strömungsgeschwindigkeit von 6 Liter Helium je Minute bei Anwendung des erfindungsgemässen Verfahrens eine Verringerung der Fasertemperatur auf 60°C mit Wasserkühlung der gekühlten Wand bewirkt werden. Die Temperatur der Faser beim Einführen in die Kühlvorrichtung betrug etwa 800°C. Das Helium wurde dabei nicht gekühlt, beim Eintreten in das hohle Rohr betrug die Temperatur etwa 20°C. Falls ausreichende Vorsichtsmassnahmen getroffen werden ist reiner Wasserstoff ebenfalls verwendbar.

Nach einer weiteren vorteilhaften Ausführungsform des erfindungsgemässen Verfahrens wird die gekühlte Wand auf eine Temperatur unter der Umgebungstemperatur gekühlt, wobei also der Temperaturgradient zwischen Faser und Wand steiler ist, als wenn die Wand die Umgebungstemperatur aufweist. Dies kann zu einem schnelleren Wärmetransport und damit zu einer Verringerung der Länge der Kühlvorrichtung bei gleichbleibender Ziehgeschwindigkeit, oder bei gleichbleibender Länge zu einer Steigerung der Ziehgeschwindigkeit führen. Das erfindungsgemässe Verfahren bietet den zusätzlichen Vorteil, dass dem Helium ein gasförmiger bzw. flüchtiger Stoff hinzugefügt werden kann, der derart auf die Faseroberfläche einwirkt, dass dadurch die Haftung der Kunststoffbedeckung beeinflusst und/oder die Reaktivität der Faseroberfläche mit Wasserdampf verringert wird.

Eine Vorrichtung zum Ziehen einer Faser aus einer Vorform und zum Anbringen einer Bedeckung aus Kunststoff auf der Faser umfasst hintereinander:

- einen Ofen zum Erhitzen eines Endes einer Vorform auf die Faserziehtemperatur;
- eine Vorrichtung zum Anbringen einer Kunststoffbedeckung auf der aus der Vorform gezogenen Faser;
- eine zwischen dem Ofen und der Kunststoffbedeckungsvorrichtung angeordnete Kühlvorrichtung, in der die Faser unter Verwendung eines Gases auf eine zum Anbringen der Kunststoffbedeckung geeignete Temperatur gekühlt wird.

Die Kühlvorrichtung weist dabei die folgenden Merkmale auf: sie hat ein hohles Rohr, welches die Faser direkt umgibt und aus einem Festen Material besteht und Mittel um eine Atmosphäre eines Wärmetransportgases in dem von dem hohlen Rohr eingechloseen Raum, durch den die Faser hindurchgeführt wird, zu erzeugen. Nach der Erfindung weist die Kühlvorrichtung dann noch Mittel auf um das hohle Rohr zu kühlen.

Vorzugsweise wird das hohle Rohr mit einer Flüssigkeit gekühlt, weil damit ein besserer Wirkungsgrad erhalten werden kann, als bei Kühlung des hohlen Rohres mit einem Gas. Eine ander Möglichkeit ist ein Peltier-System.

Das hohle Rohr besteht selbstverständlich am besten aus einem die Wärme gut leitenden Metall, wie beispielsweise Aluminium, Kufper oder aus einer Legierung dieser Metalle. Eine Vergrösserung der Wärmeabfuhr lässt sich noch erreichen, wenn das hohle Rohr auf der der hindurchgeführten Faser zugewandten Seite zur Erhöhung der Wärmeaufnahme geschwärzt ist, wobei eine derartige Schicht beispielsweise aus einem feinverteilten Nickel- oder Kobaltsulfid bestehen kann.

Ein geeigneter Rohrinnendurchmesser liegt zwischen 10 mm und 20 mm. Die Mittel, um das hohle Rohr zu kühlen, können beispielsweise darin bestehen, dass das zu klühlende Rohr von einem zweiten Rohr umgeben ist und dass eine Zufuhr und eine Abfuhr zum Hindurchführen eines flüssigen Kühlmittels durch den Hohlraum zwischen den beiden Rohren vorhanden sind. Ein geeigneter Abstand zwischen den zwei Rohrwänden, die den Raum für das Kühlmittel begrenzen, liegt beispielsweise zwischen 5 mm und 15 mm. In dem Raum zwischen den zwei Rohren können an der Aussenwand des hohlen Rohres befestigte Kühlrippen vorhanden sein. Auch ist es möglich, in dem Raum eine sich schraubenlinienförmig erstreckende Trennwand zwischen den beiden Rohren anzubringen, wodurch das Kühlmittel gezwungen wird, sich Schraubenlinienförmig um das hohle Rohr in dem Raum zwischen den beiden Rohren zu bewegen. Es ist jedoch auch möglich, auf dem hohlen Rohr an der von der hindurchgeführten Faser abgewandten Seite schraubenlinienförmig ein Kühlrohr anzubringen, durch das die Kühlflüssigkeit hindurchgeführt wird.

Das hohle Rohr ist vorzugsweise an dem Ende, wo die Faser das Rohr verlässt, d.h. auf der Seite der Kunststoffbedeckungsvorrichtung, mit einer Gaszufuhr in Form eines Rohres, das in den von dem hohlen Rohr eingeschlossenen Raum mündet, versehen. Auf diese Weise wird das Wärmetransportgas eingeführt und zwar derart, dass dies gegenüber der Faser im Gegenstrom durch das Rohr hindurchströmt. Um letzteres zu fördern, wird das hohle Rohr mit Ausnahme einer kleinen Öffnung zum Hindurchführen der Faser abgeschlossen. Dies kann auf geeignete Weise mit einer Blende erfolgen, wodurch der Durchmesser der Faserausziehöffnung auf einen gewünschten geringen Durchmesser zu dem Zeitpunkt zurückgebracht werden kann, wo die Faser sich auf stabile Art und Weise, d.h. ohne Schwingungen, durch das hohle Rohr bewegt. Das Schwingen der Faser kann beispielsweise dadurch vermieden werden, dass das Gas über ein Rohr zugeführt wird, das gegenüber dem hohlen Rohr tangential angeordnet ist und in den von dem hohlen Rohr eingeschlossenen Raum mündet. Nach einer günstigen Ausführungsform ist dabei in dem hohlen Rohr zwischen der Mündung des Gaszuführungsrohres und der Achse des hohlen Rohres ein Rohr angeordnet mit einem Aussendurchmesser, der gross genug ist um die Faser hindurchlassen zu können, die sich in Richtung des Endes des hohlen Rohres, wo die Faser eingeführt wird, d.h. zu der Seite des Ofens nicht weiter erstreckt, als notwendig ist, um zu vermeiden, dass durch das einströmende Wärmetransportgas die Faser ins Schwingen gerät.

Obschon mit der beschriebenen Vorrichtung, wie es sich in der Praxis erwiesen hat, die Faser auf eine ausreichend niedrige Temperatur gekühlt werden kann, scheinen dennoch mehrere Massnahmen möglich, um die Qualität der Faser zu verbessern.

So ist es beispielsweise günstig, den Kontakt der Faser mit der umgebenden Atmosphäre zwischen der Kühlvorrichtung und der Kunststoffbedeckungsvorrichtung möglichst zu vermeiden. Eine Möglichkeit dazu ist, diese unmittelbar aneinander anschliessen zu lassen. Eine weitere Möglichkeit ist, das hohle Rohr an dem der Kunststoffbedeckungsvorrichtung zugewandten Ende, wo die Faser austritt, mit einer auf der von diesem Ende abgewandten Seite offenen Kammer zu versehen, welche mit einem Gaszuführungsrohr zum Einblasen eines trocknen und staubfreien Gases versehen ist. Beim Eintreten der Faser in die Kühlvorrichtung besteht die Gefahr, dass auch Luft in die Kühlvorrichtung geführt wird, was zu einer Verringerung der Wärmetransportleistung des Gases in dem hohlen Rohr führen kann. Dies kann, falls es für notwendig gehalten wird, dadurch vermieden werden, dass das hohle Rohr auf der Eingangsseite - d.h. an dem Ofen zugewandten Ende - mit einer auf der von diesem Ende abgewandten Seite offenen Kammer und mit einem Gaszuführungsrohr zum Einblasen des selben Gases in diese Kammer, das in dem hohlen Rohr als Wärmetransportmedium verwendet wurd, versehen wird.

Die Kühlleistung lässt sich noch dadurch vergrössern, dass zwischen dem Ofen und der Kühlvorrichtung ein Strahlungsschirm angebracht wird, beispielsweise ein Spiegel aus die Wärme reflektierendem Metall wie Aluminium, welcher die Kühlvorrichtung gegen die Wärmestrahlung des Ofens schützt.

Ein Ausführungsbeispiel der Erfindung ist in der Zeichnung dargestellt und wird im folgenden näher beschrieben. Es zeigen

Fig. 1 schematisch einen Schnitt durch eine Vorrichtung nach der Erfindung,

Fig. 2 schematisch und detailliert einen Schnitt durch eine Kühlvorrichtung, wie diese in der Vorrichtung nach Fig. 1 verwendet werden kann.

Fig. 3 einen Schnitt gemäss der Linie III-III in Fig. 2,

Fig. 4 eine Einzelheit der Vorrichtung mit einer zusätzlichen Gaszufuhr,

Fig. 4A einen Schnitt gemäss der Linie IV-IV in Fig. 4,

Fig. 5 eine schematische Darstellung eines Teils der in Fig. 1 dargestellten Vorrichtung mit einem Strahlungsschirm.

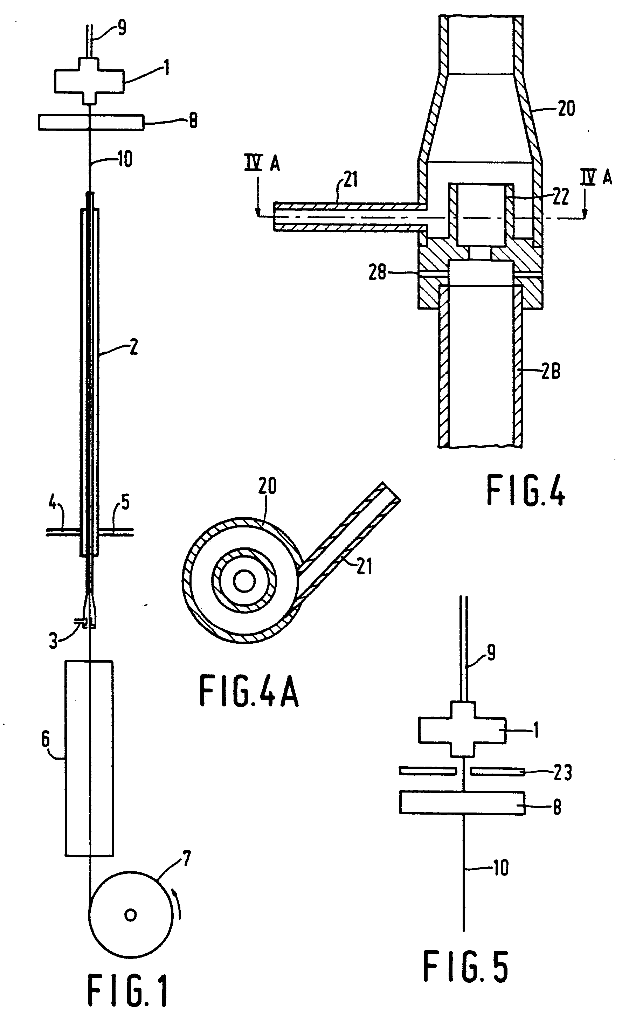

Die erfindungsgemässe Vorrichtung weist einen Ziehofen 1 und ein doppelwandiges Metallrohr 2 mit einer Gaszufuhr 3 zum Zuführen von beispielsweise Helium zu dem innerhalb der Innenwand des Rohres 2 liegenden Raum auf. Das Rohr 2 ist weiterhin mit einem Zuführungsrohr 4 und einem Abführungsrohr 5 zum Zuführen bzw. Abführen von Kühlmittel in bzw. aus dem zwischen den Wänden des doppelwandigen Rohres 2 liegenden Raum versehen. Die Vorrichtung weist weiterhin eine Vorrichtung zum Anbringen und Aushärten der Kunststoffumhüllung auf, die schematisch als Block 6 dargestellt ist. Weiterhin sind in Fig. 1 eine Aufwickeltrommel 7 und schematisch eine Vorrichtung zum kontinuierlichen Messen des Faserdurchmessers und zur Regelung der Ziehgeschwindigkeit abhängig von diesem Durchmesser angegeben (Block 8).

Die Vorrichtung wird wie folgt verwendet: Aus einer Vorform 9 wird eine Faser 10 gezogen, wobei die Ziehgeschwindigkeit über den Durchmessermonitor 8 derart geregelt wird, dass eine Faser 10 mit einem möglichst konstanten Durchmesser erhalten wird. Die Faser 10 wird daraufhin in die Kühlvorrichtung, die im wesentlichen aus einem doppelwandigen Rohr 2 besteht, eingeführt, wo die Faser auf eine Temperatur gekühlt wird, bei der die Kunststoffumhüllung angebracht werden kann. Über das Zuführungsrohr 4 und das Abführungsrohr 5 wird das Rohr 2 beispielsweise mit Wasser gekühlt. Nachdem in der Vorrichtung 6 eine Kunststoffschicht angebracht und ausgehärtet ist, wird die Faser auf die Trommel 7 aufgewickelt.

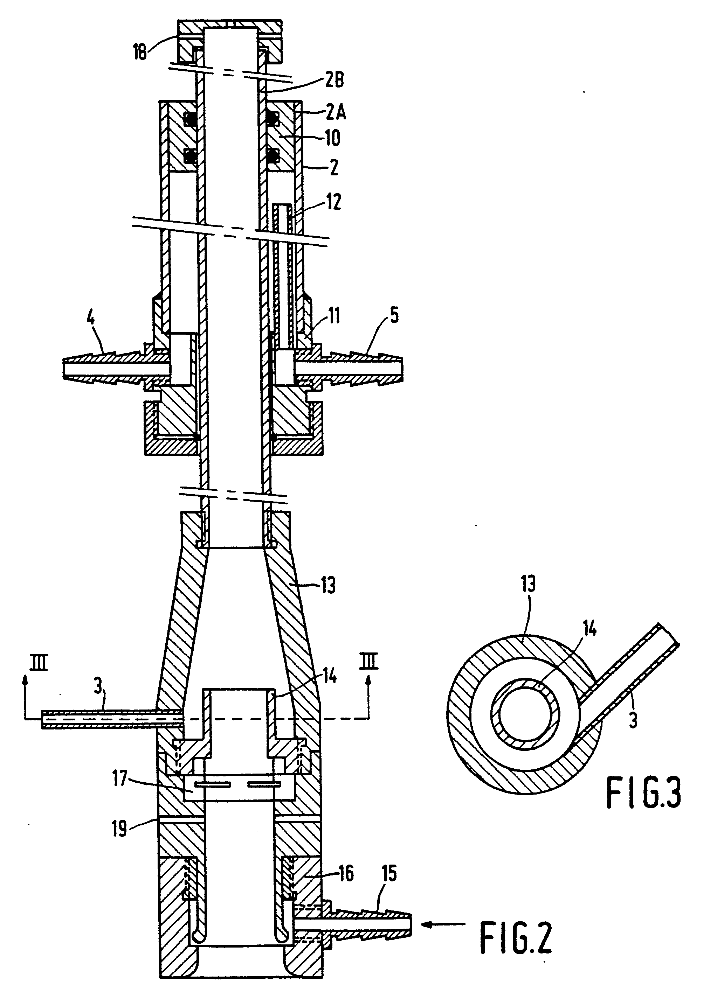

Fig. 2 zeigt detailliert eine Ausführungsform eine Kühlvorrichtung, wie diese in der Vorrichtung nach der Erfindung verwendet werden kann. Die im Schnitt dargestellte Kühlvorrichtung weist eine doppelwandige Rohr 2 mit einem Aussenrohr 2A und einem Innenrohr 2B aus einem die Wärme gut leitenden Material auf. Das Rohr 2B bestand bei einer ausgeführten Anordnung aus einem Aluminiumrohr mit einem Innendurchmesser von 16 mm und einem Aussendurchmesser von 20 mm bei einer Länge von 220 cm. Der Abstand zwischen den Rohren betrug 7 mm. Dem durch die Rohre 2A und 2B und die Dichtungen 10 und 11 ingeschlossenen Raum wird über das Zuführungsrohr 4 ein Kühlmittel zugeführt. Über das Abführungsrohr 5, das in der dargestellten Ausführungsform oben in den abgeschlossenen Raum zwischen den Rohren 2A und 2B über ein Verlängerungsrohr 12 mündet, wird das Kühlmittel abgeführt. Das Kühlmittel kann aus Leitungswasser bestehen, jedoch kann auch eine bis unter die Umgebungstemperatur gekühlte Flüssigkeit im Kreislauf gepumpt werden. Das Kühlmittel kann in diesem Fall aus einer Salzlösung oder aus einer Flüssigkeit mit einem Gefrierpunkt unterhalb der Umgebungstemperatur, wie Trichlorfluormethan, Propylenglykol, Äthylenglykol, Methylenchlorid, Trichloräthylen, Azeton, Methylalkohol und Äthylalkohol bestehen. Die Kühlvorrichtung weist weiterhin ein Gaszuführungsrohr 3 auf, durch das ein Wärmetransportgas in den durch das Rohr 2B eingeschlossenen Raum eingeführt werden kann. Als Wärmetransportgase kommen, wenn ausschliesslich auf die Wärmetransportleistung geachtet wird, insbesondere Helium und Wasserstoff in Betracht. Aus Sicherheitsgründen wird vorzugsweise Helium oder Gemische aus Helium und Wasserstoff verwendet, die bei Vermischung mit Luft auch bei hoher Temperatur nicht zünden oder zu Explosionen führen. Das Wärmetransportgas wird über die Gaszufuhr tangential in den sich kegelförmig erweiternden Teil 13 eingeführt, der sich an das Rohr 2B anschliesst, wie dies in Fig. 3 dargestellt ist. Um zu vermeiden, dass die Faser an dieser Stelle ins Schwingen gerät, ist im Bereich der Gaszuführung 3 in dem sich kegelförmig erweiternden Teil 13, der sich an das Rohr 2B anschliesst, ein Schutzrohr 14 angeordnet, welches einen Innendurchmesser von 16 mm und einen Aussendurchmesser von 20 mm aufweist.

In der Praxis hat es sich als empfehlenswert herausgestellt, die Faser beim Verlassen der Kühlvorrichtung 2, bevor sie mit Kunststoff umhüllt wird in der Vorrichtung 6 (Fig. 1), möglichst gegen Wasserdampf und Staub zu schützen. Deshalb wird eine Ausführungsform der Vorrichtung bevorzügt, bei welcher über die Gaszufuhr 15 ein trocknes Schutzgas wie Stickstoff oder Helium in die auf der Unterseite offene, die aus der Vorrichtung austretende Faser umgebende Kammer 16 eingeblasen wird.

Die Vorrichtung ist mit einer Blende 17 versehen, mit der die Öffnung, durch welche die Faser den eigentlichen Kühlraum verlässt ebenso wie Heliumverlust in der Bewegungsrichtung der Faser möglichst klein gemacht wird. Über die Öffnungen 18 und 19 an dem Fasereintrittsende bzw. Faseraustrittsende der Vorrichtung kann die Kühlvorrichtung optisch zur Faser derart angeordnet werden, dass letztere sich möglichst in der Achse des Rohres 2B befindet.

Mit der Kühlvorrichtung nach Fig. 2 wurden die in der Tafel 1 angegebenen Temperaturen bei den angegebenen Heliummengen erreicht; das Rohr 2B hatte eine Länge von 220 cm und einen Innendruckmesser von 16 mm, das Rohr 2B bestand aus Aluminium und hatte eine Wandstärke von 2 mm. Das Rohr 2B wurde mit Leitungswasser gekühlt bei einer Durchströmungsgeschwindigkeit 1 - 2 Liter/Min. Das nicht gekühlte Helium wurde mit einer Geschwindigkeit von 4 Liter/Min. hindurchgeführt. Die Fasertemperatur bei 18 betrug etwa 800° C.

**Tafel 1**

| Faserdurchführungsgeschwindigkeit in m/s | Temperatur in °C beim Verlassen Verlassen der Kühlvorrichtung |
|---|---|
| 4 | 50 |
| 5 | 60 |
| 6 | 75 |

Wenn die Faserdurchführungsgeschwindigkeit konstant auf 6 m/s gehalten und die Heliumdurchströmungsmenge geändert wurde, wurden die in der Tafel 2 angegebenen Resultate erzielt:

**Tafel 2**

| Heliumdurchführungsmenge in l/Minute | Temperatur in °C beim Verlassen der Kühlvorrichtung |
|---|---|
| 2 | 120 |
| 3 | 100 |
| 4 | 75 |
| 6 | 60 |

Es dürfte einleuchten, dass eine Vergrösserung der Gasdurchströmungsgeschwindigkeit nur einen relativ geringen Einfluss auf die Kühlgeschwindigkeit und die erreichte Endtemperatur ausübt. Im wesentlichen wird dadurch die Mitnahme von Luft durch die Faser in der Vorrichtung verringert. Eine Vergrösserung der Kühlleistung kann dadurch erreicht werden, dass die Innenwand des Rohres 2B geschwärzt und/oder das Eintrittsende des Rohres 2B mit einer Heliumzuführungsvorrichtung versehen wird, um das Mitnehmen von Luft durch die Faser zu vermeiden und/oder mit einem Strahlungsschirm 23 beispielsweise aus Aluminium um Strahlungswärme abzuschirmen.

Fig. 4 zeigt auf schematische Weise eine zusätzliche Heliumzuführungsvorrichtung, die aus einem umgebenden Teil 20 und einem Gaszuführungsrohr 21 besteht, durch das Gas tangential zugeführt wird (siehe Fig. 4A). Innerhalb des umgebenden Teils 20 befindet sich ein Rohr 22. Durch das Rohr 22 wird vermieden, dass durch das Zuführungsrohr 21 zugeführtes Helium die Faser zum Schwingen bringt. Die Zuführungsvorrichtung befindet sich am oberen Ende des Rohres 2B (siehe Fig. 1).

Fig. 5 zeigt, an welcher Stelle der Strahlungsschirm 23 angeordnet ist.

**Patentansprüche**

1. Verfahren zum Herstellen einer optischen Faser (10) mit einer Umhüllung aus Kunststoff, wobei die Faser aus dem auf die Ziehtemperatur erhitzten Ende einer Vorform (9) gezogen und danach gekühlt wird, wobei sie durch eine gasgefüllte Kühlvorrichtung (2) worin die Faser mit dem Gas in Kontakt kommt und nach der Kühlung durch eine Kunststoffanbringungsvorrichtung (6) hindurchgeführt wird, dadurch gekennzeichnet, dass

**0 174 699**

die Faser im wesentlichen durch Wärmeabgabe an eine stark gekühlte Wand (2B) gekühlt wird, wobei das Gas als Wärmetransportmedium wirksam ist.

2. Verfahren nach Anspruch 1, dadurch gekennzeichnet, dass die Faser (10) durch ein mit einem Wärmetransportgas gefülltes Rohr (2B) hindurchgeführt wird, das auf der von dem gasgefüllten Raum abgewandten Seite mit einer flüssigkeit gekühlt wird.

3. Verfahren nach Anspruch 1, dadurch gekennzeichnet, dass sas Wärmetransportgas aus Helium oder einem bei Luftszufuhr nichtrennbaren oder nicht-explosiven Gemisch aus Helium und Wasserstoff besteht.

4. Verfahren nach Anspruch 1, dadurch gekennzeichnet, dass das Wärmetransportgas gegenüber der Rewegungsrichtung der Faser (10) im wesentlichen im Gegenstrom durch die Kühlvorrichtung (2) hindurchgeführt wird.

5. Verfahren nach Anspruch 1, dadurch gekennzeichnet, dass die Faser (10) vor der Einführung in die Kühlvorrichtung (2) im Gegenstrom von einem Gas oder einem Gasgemisch umspült wird, das in der Kühlvorrichtung als Wärmetransportmittel verwendet wird.

6. Verfahren nach Anspruch 1, dadurch gekennzeichnet, dass die Faser (10) nach dem Verlassen der Kühlvorrichtung (2) von einem trocknen und staubfreien Gas umspült wird.

7. Verfahren nach Anspruch 6, dadurch gekennzeichnet, dass die Faser (10) nach dem Verlassen der Kühlvorrichtung (2) mit trocknem Stickstoff umspült wird.

8. Verfahren nach Anspruch 2, dadurch gekennzeichnet, dass die Faser (10) durch ein Rohr (2B) hindurchgeführt wird, das auf der von dem gasgefüllten Raum abgewandten Seite mit Wasser gekühlt wird.

9. Verfahren nach Anspruch 2, dadurch gekennzeichnet, dass die Faser (10) durch ein Rohr (2B) hindurchgeführt wird, das auf der von dem gasgefüllten Raum abgewandten Seite mit einer Flüssigkeit gekühlt wird, welche eine niedrigere Temperatur als die Umgebungstemperatur aufweist.

10. Verfahren nach Anspruch 2, dadurch gekennzeichnet, dass die Faser (10) durch ein Rohr (2B) hindurchgeführt wird, das aus einem die Wärme gut leitenden Metall besteht.

11. Verfahren nach Anspruch 2, dadurch gekennzeichnet, dass die Faser (10) durch ein Rohr (2B) hindurchgeführt wird, welches aus Aluminium, Kupfer oder einer Legierung dieser Metalle besteht.

12. Verfahren nach Anspruch 2, dadurch gekennzeichnet, dass die Faser (10) durch ein Rohr (2B) hindurchgeführt wird, das auf der der Faser zugewandten Seite geschwürzt ist.

13. Vorrichtung zum Herstellen einer optischen Faser (10) mit einer Umhüllung aus Kunststoff mit hintereinander:
- einem Ofen (1) zum Erhitzen eines Endes einer Vorform (9) auf die Faserziehtemperatur,
- einer Vorrichtung (6) zum Anbringen einer Kunstoffumhüllung auf der aus der Vorform gezogenen Faser,
- einer zwischen dem Ofen und der Kunststoffanbringvorrichtung angeordneten Kühlvorrichtung (2), in der die Faser unter Verwendung eines Gases auf eine zum Anbringen der Kunststoffumhüllung geeignete Temperatur gekühlt wird, wobei die Kühlvorrichtung ein die Faser direkt umgebendes, aus einem festen Material bestehendes, hohles Rohr (2B) und Mittel (3) zur Schaffung einer Atmosphäre eines Wärmetransportgases in dem von dem hohlen Rohr (2B) eingeschlossenen Raum, durch den die Faser hindurchgeführt wird, aufweist, gekennzeichnet durch Mittel (2A, 4, 5) zur Kühlung des hohlen Rohrs.

14. Vorrichtung nach Anspruch 13, dadurch gekennzeichnet, dass die Kühlvorrichtung (2) Mittel (2A, 4, 5) aufweist, um das hohle Rohr mit einer Flüssigkeit zu kühlen.

15. Vorrichtung nach Anspruch 13, dadurch gekennzeichnet, dass das hohle Rohr (2B) aus einem die Wärme gut leitenden Metall besteht.

16. Vorrichtung nach Anspruch 13, dadurch gekennzeichnet, dass das hohle Rohr (2B) aus Aluminium, Kupfer oder einer Legierung dieser Metalle besteht.

17. Vorrichtung nach Anspruch 13, dadurch gekennzeichnet, dass das hohle Rohr (2B) aus einem die Wärme gut leitenden Metall besteht und auf der der hindurchgeführten Faser (10) zugewandten Seite geschwürzt ist.

18. Vorrichtung nach Anspruch 13, dadurch gekennzeichnet, dass das hohle Rohr (2B) einen Innendurchmesser von minimal 10 mm und maximal 20 mm aufweist.

19. Vorrichtung nach Anspruch 13, dadurch gekennzeichnet, dass das hohle Rohr (2B) aus Aluminium besteht und einen Innendurchmesser von 16 mm und einen Aussendurchmesser von 20 mm aufweist.

20. Vorrichtung nach Anspruch 14, dadurch gekennzeichnet, dass das hohle Rohr (2B) von einem zweiten Rohr (2A) umgeben ist, und dass eine Zufuhr (4) und eine Abfuhr (5) zum Hindurchführen eines flüssigen Kühlmittels durch den Hohlraum zwischen den zwei Rohren vorhanden sind.

21. Vorrichtung nach Anspruch 20, dadurch gekennzeichnet, dass das hohle Rohr (2B) auf der der hindurchgeführten Faser (10) abgewandten Seite mit einem sich schraubenlinienförmig erstreckenden Kühlrohr versehen ist.

22. Vorrichtung nach Anspruch 13, dadurch gekennzeichnet, dass das hohle Rohr (2B) auf dem Ende, wo die Faser (10) das Rohr verlässt, mit einer Gaszufuhr in Form eines Rohres (3) versehen ist, das in den durch das hohle Rohr (2B) eingeschlossenen Raum mündet, um ein Wärmetransportgas in den Hohlraum des Rohres zu bringen.

23. Vorrichtung nach Anspruch 13, dadurch gekennzeichnet, dass das hohle Rohr (2B) an dem Ende, wo die Faser (10) das Rohr verlässt, mit einer Blende (17) versehen ist, mit der der Durchmesser der Faseraustrittsöffnung auf einen gewünschten kleinen Durchmesser verringert werden kann.

24. Vorrichtung nach Anspruch 22, dadurch gekennzeichnet, dass die Gaszufuhr ein Rohr (3) aufweist, das tangential zum Umfang des hohlen Rohres (2B) angeordnet ist und in den vom hohlen Rohr umschlossenen

6

Raum mündet.

25. Vorrichtung nach Anspruch 24, dadurch gekennzeichnet, dass zwischen der Mündung des Gaszuführungsrohres (3) in dem vom hohlen Rohr (2B) umschlossenen Raum und der Achse des hohlen Rohres ein Rohr (14) angeordnet ist, mit einem Innendurchmesser, welches die Hindurchführung der Faser (10) ermöglicht und welches sich nicht weiter in Richtung des Endes des hohlen Rohres (2B), in das die Faser eingeführt wird, erstreckt, wie es notwendig ist, um zu vermeiden, dass die Faser durch das einströmende Gas ins Schwingen gerät.

26. Vorrichtung nach Anspruch 13, dadurch gekennzeichnet, dass das hohle Rohr (2B) an dem Ende, wo die Faser (10) das hohle Rohr (2B) verlässt, mit einer auf der von diesem Ende abgewandten seite offenen Kammer (16) versehen ist, die mit einem Gaszuführungsrohr (15) zum Einblasen eines trocknen sauerstoffreien und staubfreien Gases in diese Kammer versehen ist.

27. Vorrichtung nach Anspruch 13, dadurch gekennzeichnet, dass das hohle Rohr (2B) an dem Ende, wo die Faser (10) in das hohle Rohr (2B) eintritt, mit einer auf der von diesem Ende abgewandten Seite offenen Kammer (20) versehen ist, die mit einem Gaszuführungsrohr (21) zum Hineinblasen des Gases versehen ist, das in dem hohlen Rohr (2B) als Wärmetransportmedium verwendet wird.

28. Vorrichtung nach Anspruch 13, dadurch gekennzeichnet, dass sich zwischen dem Ofen (1) und der Kühlvorrichtung (2) ein Strahlungsschirm (23) befindet, der die Kühlvorrichtung (2) gegen die Wärmestrahlung des Ofens abschirmt.

## Claims

1. A method of manufacturing an optical fibre (10) having a coating of synthetic resin, in which the fibre is drawn from the end of a preform (9), which end is heated to the drawing temperature, after which the fibre is cooled, the fibre being led through a gas-filled cooling device (2) in which the fibre contacts the gas, and after the fibre has cooled it is led through a device (6) for providing the synthetic resin coating, characterized in that the fibre is cooled predominantly by heat transfer to a strongly cooled wall (2B), the gas serving as a heat-transporting medium.

2. A method as claimed in Claim 1, characterized in that the fibre (10) is passed through a tube (2B) which is filled with a heat-transporting gas and which is cooled by a liquid on the side remote from the gas-filled space.

3. A method as claimed in Claim 1, characterized in that the heat-transporting gas is helium or a mixture of helium and hydrogen which does not ignite or give rise to explosions when it mixes with air.

4. A method as claimed in Claim 1, characterized in that the heat-transporting gas is passed through the cooling device (2) substantially countercurrent to the direction of movement of the fibre (10).

5. A method as claimed in Claim 1, characterized in that before the fibre (10) is introduced into the cooling device (2) the fibre traverses an oppositely directed flow of a gas or gas mixture which is used in the cooling device as a heat-transporting medium.

6. A method as claimed in Claim 1, characterized in that after the fibre (10) has left the cooling device, it traverses a dry and dust-free gas flow.

7. A method as claimed in Claim 6, characterized in that after the fibre (10) has left the cooling device (2) it traverses a flow of dry nitrogen.

8. A method as claimed in Claim 2, characterized in that the fibre (10) is passed through a tube (2B) which is cooled with water on the side remote from the gas-filled space.

9. A method as claimed in Claim 2, characterized in that the fibre (10) is passed through a tube (2B) which is cooled on the side remote from the gas-filled space with a liquid having a temperature lower than the ambient temperature.

10. A method as claimed in Claim 2, characterized in that the fibre (10) is passed through a tube (2B) consisting of a readily heat-conducting metal.

11. A method as claimed in Claim 2, characterized in that the fibre is passed through a tube (2B) consisting of aluminium, copper or an alloy of these metals.

12. A method as claimed in Claim 2, characterized in that the fibre (10) is passed through a tube (2B) which is blackened on the side facing the fibre.

13. A device for manufacturing an optical fibre (10) having a coating of synthetic resin, comprising in succession:
   - a furnace (1) for heating one end of a preform (9) to the fibre-drawing temperature,
   - a device (6) for providing a synthetic resin coating on the fibre drawn from the preform,
   - a cooling device (2) accomodated between the furnace and the device for providing the synthetic resin, in which the fibre is cooled by means of a gas to a temperature suitable for providing the coating, the cooling device comprising a hollow tube (2B) which consists of a solid material and which directly surrounds the fibre, and means (3) for providing an atmosphere of a heat-transporting gas in the space enclosed by the hollow tube (2B) through which the fibre is passed, characterized by means (2A, 4, 5) for cooling the hollow tube.

14. A device as claimed in Claim 13, characterized in that the cooling device (2) comprises means (2A, 4, 5) for cooling the hollow tube with a liquid.

15. A device as claimed in Claim 13, characterized in that the hollow tube (2B) consists of a readily heat-conducting metal.

16. A device as claimed in Claim 13, characterized in that the hollow tube (2B) consists of aluminium, copper or an alloy of these metals.

17. A device as claimed in Claim 13, characterized in that the hollow tube (2B) consists of a readily heat-conducting metal, and in that the hollow tube is blackened on the side facing the led-through fibre (10).

18. A device as claimed in Claim 13, characterized in that the hollow tube (2B) has an inside diameter of at least 10 mm and at most 20 mm.

19. A device as claimed in Claim 13, characterized in that the hollow tube (2B) consists of aluminium and has an inside diameter of 16 mm and an outside diameter of 20 mm.

20. A device as claimed in Claim 14, characterized in that the hollow tube (2B) is surrounded by a second tube (2A) and that an inlet (4) and an outlet (5) are provided for passing a liquid coolant through the hollow space between the two tubes.

21. A device as claimed in Claim 20, characterized in that the hollow tube (2B) has a helically extending cooling tube on the side remote from the passed-through fibre (10).

22. A device as claimed in Claim 13, characterized in that the hollow tube (2B) has a gas-inlet at the end where the fibre (10) leaves the tube, the gas-inlet being in the form of a tube (3) which ends in the space enclosed by the hollow tube (2B) to introduce a heat-transporting gas into the hollow space in the tube.

23. A device as claimed in Claim 13, characterized in that the hollow tube (2B) comprises a diaphragm at the end where the fibre (10) leaves the tube, by means of which diaphragm the diameter of the fibre outlet can be reduced to a desired small diameter.

24. A device as claimed in Claim 22, characterized in that the gas-inlet comprises a tube (3) which is arranged tangentially relative to the circumference of the hollow tube (2B) and which ends in the space enclosed by the hollow tube.

25. A device as claimed in Claim 24, characterized in that a tube (14) is acomodated between the aperture of the gas-inlet tube (3) in the space enclosed by the hollow tube (2B) and the axis of the hollow tube, said tube (14) having an inside diameter which is sufficient to pass the fibre (10) and which does not extend any further in the direction of the end of the hollow tube (2B) where the fibre is inserted than is necessary to prevent the fibre (10) from starting to vibrate as a result of the inflowing gas.

26. A device as claimed in Claim 13, characterized in that at the end where the fibre (10) leaves the hollow tube (2B), the hollow tube (2B) comprises a chamber (16) which is open on the side remote from the said end and which chamber comprises a gas-inlet tube (15) for blowing a dry oxygen-free and dust-free gas into the said chamber.

27. A device as claimed in Claim 13, characterized in that at the end where the fibre (10) enters the hollow tube (2B), the hollow tube (2B) comprises a chamber (20) which is open on the side remote from the said end, said chamber comprising a gas-inlet tube (21) for blowing into the said chamber the gas which is used as a heat-transporting medium in the hollow tube (2B).

28. A device as claimed in Claim 13, characterized in that a radiation screen (23) is present between the furnace (1) and the cooling device (2), which radiation screen protects the cooling device (2) from thermal radiation originating from the furnace.

**Revendications**

1. Procédé pour la réalisation d'une fibre optique (10) munie d'un revêtement en matière synthétique, selon lequel la fibre est étirée de l'extrémité d'une préforme (9) portée à la température d'étirage et ensuite refroidie, refroidissement pour. lequel la fibre traverse un dispositif de refroidissement rempli de gaz (2) dans lequel la fibre est en contact avec le gaz et traverse un dispositif d'application de matière synthétique (6) après le refroidissement, caractérisé en ce que la fibre est essentiellement refroidie par cession de chaleur à une paroi fortement refroidie (2B), le gaz faisant office de fluide de transport de chaleur.

2. Procédé selon la revendication 1, caractérisé en ce que la fibre (10) est guidée à travers un tube (2B) rempli d'un gaz de transport de chaleur, qui est refroidi à l'aide d'un liquide du côté situé à l'opposé de l'enceinte remplie de gaz.

3. Procédé selon la revendication 1, caractérisé en ce que le gaz de transport de chaleur est constitué par de l'hélium ou un mélange d'hélium et d'hydrogène non explosif ou non combustible par amenée d'air.

4. Procédé selon la revendication 1, caractérisé en ce que le gaz de transport de chaleur est guidé essentiellement en contrecourant par rapport à la direction de déplacement de la fibre (10) à travers le dispositif de refroidissement (2).

5. Procédé selon la revendication 1, caractérisé en ce qu'avant l'introduction dans le dispositif de refroidissement (2), la fibre (10) est entourée en contrecourant d'un gaz ou d'un mélange de gaz qui est utilisé comme moyen de transport de chaleur dans le dispositif de refroidissement.

6. Procédé selon la revendication 1, caractérisé en ce qu'après la sortie du dispositif de refroidissement (2), la fibre (10) est entourée d'un gaz sec exempt de poussière.

7. Procédé selon la revendication 6, caractérisé en ce qu'après la sortie du dispositif de refroidissement (2), la fibre est entourée d'azote sec.

8

8. Procédé selon la revendication 2, caractérisé en ce que la fibre (10) est guidée à travers un tube (2R) qui est refroidi à l'aide d'eau du côté opposé à l'enceinte remplie de gaz.

9. Procédé selon la revendication 2, caractérisé en ce que la fibre (10) est guidée à travers un tube (2B) qui est refroidi, du côté opposé à l'enceinte remplie de gaz, par un liquide présentant une température aussi faible que la température ambiante.

10. Procédé selon la revendication 2, caractérisé en ce que la fibre (10) est guidée à travers un tube (2B) qui est constitué par un métal non conducteur de la chaleur.

11. Procédé selon la revendication 2, caractérisé en ce que la fibre (10) est guidée à travers un tube (2B) qui est constitué par de l'aluminium, du cuivre ou un alliage de ces métaux.

12. Procédé selon la revendication 2, caractérisé en ce que la fibre (10) est guidée à travers un tube (2B) qui est noirci du coîté situé vis-à-vis de la fibre.

13. Procédé pour la réalisation d'une fibre optique (10) munie d'un revêtement en matière synthétique comportant successivement:
- un four (1) pour le chauffage d'une extrémité d'une préforme (9) à la température d'étirage de la fibre,
- un dispositif (6) pour l'application d'une enveloppe en matière synthétique sur la fibre étirée à partir de la préforme,
- un dispositif de refroidissement (2) disposé entre le four et le dispositif d'application de matière synthétique, dans lequel la fibre est refroidie à l'aide d'un gaz à la température appropriée à l'application d'un revêtement en matière synthétique, dispositif qui comporte un tube creux (2B) constitué par un matériau solide et entourant de façon directe la fibre et des moyens (3) servant à créer une atmosphère de gaz de transport de chaleur dans l'enceinte enfermée par le tube creux (2B) et traversée par la fibre, caractérisé par des moyens (2A, 4, 5) servant au refroidissement du tube creux.

14. Dispositif selon la revendication 13, caractérisé en ce que le dispositif de refroidissement (2) présente des moyens (2A, 4, 5) servant à refroidir le tube creux à l'aide d'un liquide.

15. Dispositif selon la revendication 13, caractérisé en ce que le tube creux (2B) est constitué par un métal convenablement conducteur de la chaleur.

16. Dispositif selon la revendication 13, caractérisé en ce que le tube creux (2B) est constitué par de l'aluminium, du cuivre ou un alliage de ces métaux.

17. Dispositif selon la revendication 13, caractérisé en ce que le tube creux (2B) est constitué par un métal bon conducteur de la chaleur et est noirci sur la face située vis-à-vis des fibres (10) traversant le tube.

18. Dispositif selon la revendication 13, caractérisé en ce que le tube creux (2B) présente un diamètre intérieur d'au minimum 10 mm et d'au maximum 20 mm.

19. Dispositif selon la revendication 13, caractérisé en ce que le tube creux (2B) est constitué par de l'aluminium et présente un diamètre intérieur de 16 mm et un diamètre extérieur de 20 mm.

20. Dispositif selon la revendication 14, caractérisé en ce que le tube creux (2B) est entouré d'un deuxième tube (2A) et qu'une amenée (4) et une évacuation (5) servant au passage d'un agent de refroidissement liquide à travers l'enceinte creuse comprise entre les deux tubes.

21. Dispositif selon la revendication 20, caractérisé en ce que du côté opposé à la fibre traversant le tube creux (2B) celui-ci est muni d'un tube de refroidissement s'étendant de façon hélicoïdale.

22. Dispositif selon la revendication 13, caractérisé en ce qu'à l'extrémité où la fibre (10) quitte le tube, le tube creux (2B) est muni d'une amenée de gaz sous forme d'un tube (3) qui débouche dans l'enceinte enfermée par le tube creux (2B) pour introduire un gaz de transport de chaleur dans l'enceinte creuse des tubes.

23. Dispositif selon la revendication 13, caractérisé en ce qu'à l'extrémité où la fibre (10) quitte le tube creux (2B), le tube creux (2B) est muni d'un diaphragme (17) permettant de réduire le diamètre de l'orifice de sortie de fibre au diamètre réduit désiré.

24. Dispositif selon la revendication 22, caractérisé en ce que l'amenée de gaz présente un tube (3) qui est disposé d'une façon tangentielle par rapport à la périphérie du tube creux (2B) et qui aboutit dans l'enceinte enfermée par le tube creux.

25. Dispositif selon la revendication 24, caractérisé en ce qu'entre l'orifice du tube d'amenée de gaz (3) dans l'enceinte enfermée par le tube creux (2B) et l'axe du tube creux est disposé un tube (14) d'un diamètre interne permettant le passage de la fibre (10) et ne s'étendant pas plus loin dans la direction de l'extrémité du tube creux (2B) dans lequel est introduite la fibre qu'il n'est nécessaire pour éviter que la fibre ne commence à vibrer sous l'effet du gaz entrant.

26. Dispositif selon la revendication 13, caractérisé en ce qu'à l'extrémité où la fibre (10) quitte le tube creux (2B), le tube creux (2B) est muni d'une chambre (16) ouverte du côté opposé à ladite extrémité et munie d'un tube d'amenée de gaz pour l'introduction par soufflage d'un gaz exempt d'oxygène et exempt de poussière dans cette chambre.

27. Dispositif selon la revendication 13, caractérisé en ce qu'à l'extrémité où la fibre (10) entre dans le tube creux (2B), le tube creux (2B) est muni d'une chambre (20) qui est ouverte du côté opposé à ladite extrémité et qui est munie d'un tube d'amenée de gaz (21) servant à l'introduction par soufflage du gaz utilisé dans le tube creux (2B) comme fluide de transport de chaleur.

28. Dispositif selon la revendication 13, caractérisé en ce qu'entre le four (1) et le dispositif de refroidissement (2) est prévu un écran de rayonnement (23) qui protège le dispositif de refroidissement (2) contre les rayons thermiques du four.

9

FIG.1

FIG.4

FIG.4A

FIG.5

0 174 699

FIG.2

FIG.3

3